# EUROPEAN PATENT SPECIFICATION

(11) **EP 0 538 745 B1**
(45) Date of publication and mention of the grant of the patent: **30.12.1998**
(21) Application number: 92117701.0
(22) Date of filing: 16.10.1992
(51) Int. Cl.: G06F 3/033

(54) **Method for buffering high bandwidth data from an input device**
Verfahren zum Zwischenspeichern von breitbandigen Daten aus einem Eingabegerät
Méthode pour la mémorisation intermédiaire de données à bande large de dispositif d'entrée

(30) Priority: 21.10.1991 US 779703
(43) Date of publication of application: 28.04.1993
(73) Proprietor: International Business Machines Corporation, Armonk, N.Y. 10504 (US)
(72) Inventor: Tannenbaum, Alan R., Washington Grove, MD 20880 (US); Zetts, John M., Falls Church, VA 22043 (US); Gray, Michael N., Annapolis, MD 21403 (US); Granados, Teresa, Annapolis, MD 21403 (US); Mills, William A., Annapolis, MD 21403 (US)
(74) Representative: Schäfer, Wolfgang, Dipl.-Ing.

(56) References cited:
- EP-A- 304 891
- EP-A- 394 614
- IBM TECHNICAL DISCLOSURE BULLETIN vol. 30, no. 3, August 1987, NEW YORK US pages 1011 - 1012 'QUEUEING ALGORITHM FOR INTER-TASK COMMUNICATIONS'

## Description

This invention relates generally to input devices for a data processing system. More particularly, it relates to a method of preserving high bandwidth data from an input device, particularly a touch screen, to allow multiple tasks to be performed without loss of data. The use of a touch input device disposed over the viewing surface of a computer display to provide a "user friendly" means for the control of a data processing system is well known in the art. These devices are designed to allow an unsophisticated user to perform desired tasks on a computer system without extensive training. Human factor studies have shown that an input device which allows the user to input data directly on the computer display, generally known in the art as a touch input device, achieves greatest immediacy and accuracy between man and machine.

In the current graphical user interfaces developed to aid man-machine interaction, there are many items, such as menu selections, icons or windows, which a user can most easily select by a finger. In other advanced software applications which perform freehand drawing, gesture recognition or handwriting character, a stylus is more effective because of its greater precision. Thus, it would be convenient to utilize a touch input system which allows both stylus and finger touch detection.

Computer operating system software commonly treats pointing devices such as the mouse as locator devices instead of data devices. The assumption is that, as a locator device, the important events are the singular mouse button clicks. For most applications, the points of greatest significance are the beginning and end locations of the mouse movement where button down/button up events typically occur and the present position of the mouse pointer. The actual path of the mouse pointer is often irrelevant. This has resulted in the limited buffering of mouse generated events by the operating system, specifically mouse move events that report the movement of the mouse. The motion or path traversed by the mouse is reported to applications as mouse move events which are made available as they are generated (typically 40 moves per second). However, if the application is busy executing tasks of higher priority, the operating system coalesces the mouse moves, preserving only the last move reported. When software applications are unable to retrieve mouse moves as fast as they are generated i.e., during periods of high CPU utilization, they are discarded by the operating system. This results in the loss of data. However, in the past, loss of data did not present a problem for most applications.

First, in the Advanced User Interface (AUI) touch screen devices that support finger touch and/or stylus input have two modes: they may faithfully emulate a mouse device, including mouse button up, button down commands or they may be used to perform gesture or handwriting input. Gesture input is mapped by the system to commands understandable by the computer modules running on the system. The loss of mouse move events due to high CPU utilization seriously hinders the ability to use stylus or finger input for handwriting, gestures, or computer graphics. Further, the loss of data hinders the ability of the system to discern between the two types of input.

A secondary limitation of emulating a mouse with a touch screen is that the operating system does not provide the means for passing additional touch screen generated data to the application. The system mechanism for generating pointing device events is based on the mouse and therefore the data reported is limited to a pair of X/Y coordinates at display resolution and a timestamp with coarse resolution. Current touch screen displays and devices are capable of reporting numerous events and highly specific sensor data.

In addition, the point generation rate of a touch screen may reach 200 points per second, 2 to 5 times the rate of a mouse with a plethora data reported with every point. Thus, with a touch screen, the problem of "mouse move" coalescing is exacerbated as the application must retrieve points 2 to 5 times faster to avoid discording points. Future software applications specifically designed to utilize these sensor produced coordinates and concomitant stroke data may require processing of these data both real-time as they are generated and at liftoff upon completion of the stroke. Yet with current operating systems, this information is unavailable as these systems are designed to accept only keyboard or mouse data.

Another limitation using mouse event reporting for a touch screen inherent with most operating systems is that a touch screen device emulating a mouse must report coordinates in display resolution and coordinate values must change by at least display pel in either axis to be accepted as a valid mouse move. High resolution sensors may detect many moves within the distance of one display pel. Thus, the resolution of the pointing information is lost.

Patent document EP 0 304 891 discloses a method for inputting to a program information from an external source such as another independently running process. All information is transmitted to a program by means of events. Events are placed in an event queue for the program and may be selectively retrieved by the program. In retriewing the events, a program may ask for the next event.

IBM Technical Disclosure Bulletin, vol. 30, no.3, August 1987, New York US, pages 1011-1012 "Queueing Algoritm for Inter-Task Communication" discloses a method to consolidate as much information as possible into one inter-task communicating processing package with corrupting or missing critical data. Traditional communication between concurrent tasks or processes typically takes either of two approaches. One is pass every piece of information to the other process through a first-in/first-out queue, and the other approach is to sum information into the buffer which periodically cleared by the other process.
The new method combines both algorithm into one. When the mouse is moving across the screen, the interrupt service routine sums the delta positioning data into the buffer which is emptied out at periodic intervalls. However, when a button state change state occurs, the summing operation now takes place in the next element position in the queue.

It is an object of the present invention to provide sufficient storage to buffer up to a 1000 input events of any type or origin without loss of data.

It is an object of the present invention to permit multiple, concurrently active input devices, to write input events into a data processing system.

It is an object of the present invention to provide device arbitration when multiple input devices are concurrently active.

It is an object of the present invention to make all input events available to software applications and deliver them ensuring the chronological order of all input events, including mouse and keyboard, is preserved.

It is an object of the present invention to make all pertinent data associated with each input event available to applications as each event is handled.

It is an object of the present invention to make all pertinent data associated with each point in each stroke on a touch sensor input device available to applications at liftoff.

It is an object of the present invention to implement a 'stroke-ahead' capability in addition to currently provided mouse-ahead and type-ahead capabilities.

It is an object of the present invention to buffer points of a touch stroke during input such that the gesture input does not time out even when pre-emption occurs for an extended period of time.

It is an object of the present invention to enable software applications to dequeue individual input events sorting by input device type, event type, or timestamp range.

It is an object of the present invention to enable software applications to halt execution while awaiting a specific input event.

These objects are solved in advantageous manner basically by the invention as laid down in the independent main claims.

Advantageous further developments of the basic solution are laid down in respective subclaims.

It provides an efficient buffering mechanism for access and retrieval of stored high bandwidth data and sufficient storage to buffer a stroke on a touch screen many seconds in duration. In a typical operating system, a channel containing a limited buffer between the input devices and the running applications is provided by the operating system. This invention provides a parallel channel of a higher bandwidth with a far superior buffering capability that complements that of the operating system, the EIQ.

When an event such as a stylus touchdown on a touch sensor is received by the system, messages are sent to both the operating system channel and the high bandwidth channel in compatible formats. The message sent to the operating system channel contains only limited data which is translated into the format produced by the mouse. The message sent to the high bandwidth channel contains the full spectrum of data generated by the input device. The buffer in the operating system channel will discard "mouse moves" if the application does not retrieve them quickly enough during periods of high CPU utilization. The EIQ buffer in the high bandwidth channel keeps all data for up to 1000 input events, or whatever is deemed sufficient for the computer system, regardless of CPU usage.

In response to the interception of a "mouse" event to one of the applications in the system, the method of the present invention will check to see if there are any events in the EIQ buffer. If there are, the system dequeues all the events to send them to the intended application. Various flags are set if task preemption is detected by the system upon examination of the events in the EIQ queue. For example, as the preferred embodiment uses a delay timer to distinguish between touch input intended to be a gesture and that intended to be mouse emulation, gesture abort and ignore timeout flags are set to assure that task preemption does not affect the intended result. Further, certain events may be sent asynchronously to the EIQ buffer alone from various input devices. The present invention provides a separate thread to generate a false "mouse" message to the operating system queue to cause the system to examine the EIQ buffer for the true input event.

The invention will be shown in more detail in the following description in acordance with the drawing and in which:
- Fig. 1: shows the front view of a overlay unit used for the detection of finger touch and stylus position. The unit is disposed over a flat panel display to form what is known as a "touch workpad";
- Fig. 2: is an architectural diagram of the combined finger touch and stylus detection;
- Fig. 3: depicts a plurality application program running in a data processing system equipped with an operating system enhancement according to the present invention;
- Fig. 4: is a flow diagram which illustrates a preferred embodiment of operating data processing system according to the present invention;
- Fig. 5: is a flow diagram which illustrates the Extended Information Queue subroutine;
- Fig. 6A: depicts a flow diagram for a delay timer routine used to emulate mouse command input from a touch sensor;
- Fig. 6B: is a flow diagram for a gesture recognition abort routine;
- Fig. 7: is a flow diagram for a gesture recognition routine;
- Fig. 8: depicts a flow diagram for delay timer processing;
- Fig. 9: is a representation of the data blocks in the operation system channel queue and the EIQ buffer; and
- Fig. 10: is a flow diagram for touch sensor button event processing.

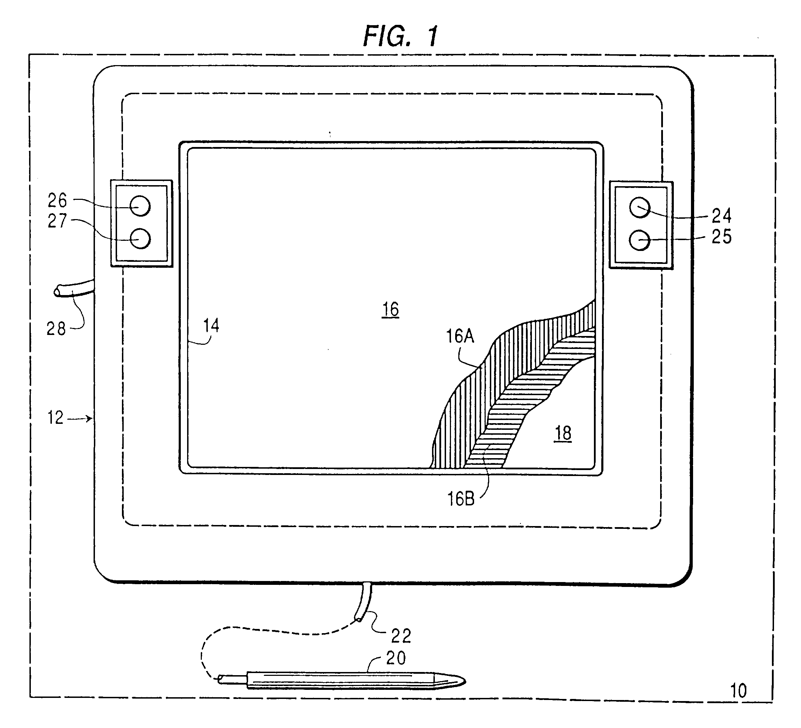

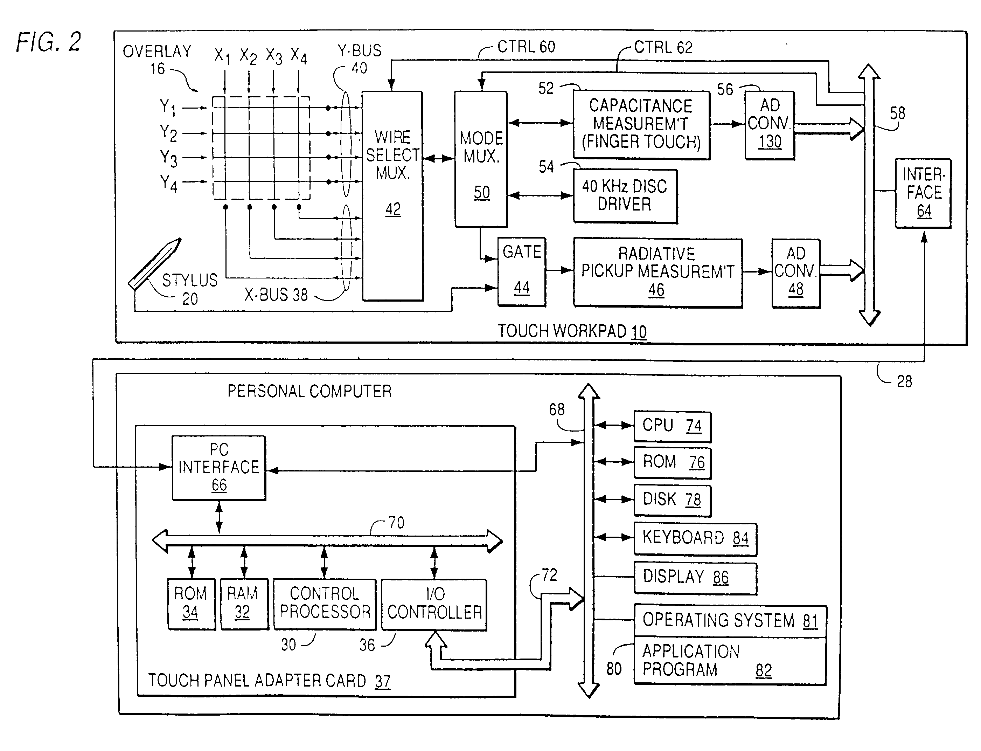

The environment in which a preferred embodiment of the invention is implemented is described with reference to FIGs. 1 and 2. Referring to Fig. 1, a touch workpad is shown. The workpad comprises a housing 12 having a rectangular recessed window 14 which surrounds the edges of a rectangular touch overlay 16. The touch overlay 16 is transparent and is disposed on a liquid crystal display (LCD) 18. The overlay 16 consists of a laminate structure including several plastic substrate layers laminated together by means of adhesive layers. The overlay 16 also includes a first plurality of transparent conductors 16A disposed in the vertical direction and a second plurality of transparent conductors 16B disposed in the horizontal direction. Several of the conductors in both vertical and horizontal directions are positioned beyond the recessed window 14 to allow more accurate location determination of the stylus 20 or a finger on or near the overlay 16 at the edges of the display window 14.

A stylus 20 is connected to cable 22 to the touch workpad. The stylus 20 acts as an antenna to pick up the signals radiated by the overlay 16, and provides much greater resolution that can be provided by a finger touch. Also on the bezel of the housing are four button switches 24-27 which can be used to change the mode in which the data from the workpad 10 is received. Workpad cable 28 is the connector between the workpad and the computer with which the user is communicating. The workpad cable 28 provides power to the workpad 10 as well as display signals to operate the LCD 18 and touch signals to operate the overlay in both finger touch and stylus modes. In addition, the cable 28 is also the conduit to the computer of the computer of the measurement of the signal strength received by the stylus 20 and the frequency change due to changes in capacitance due to a finger touch.

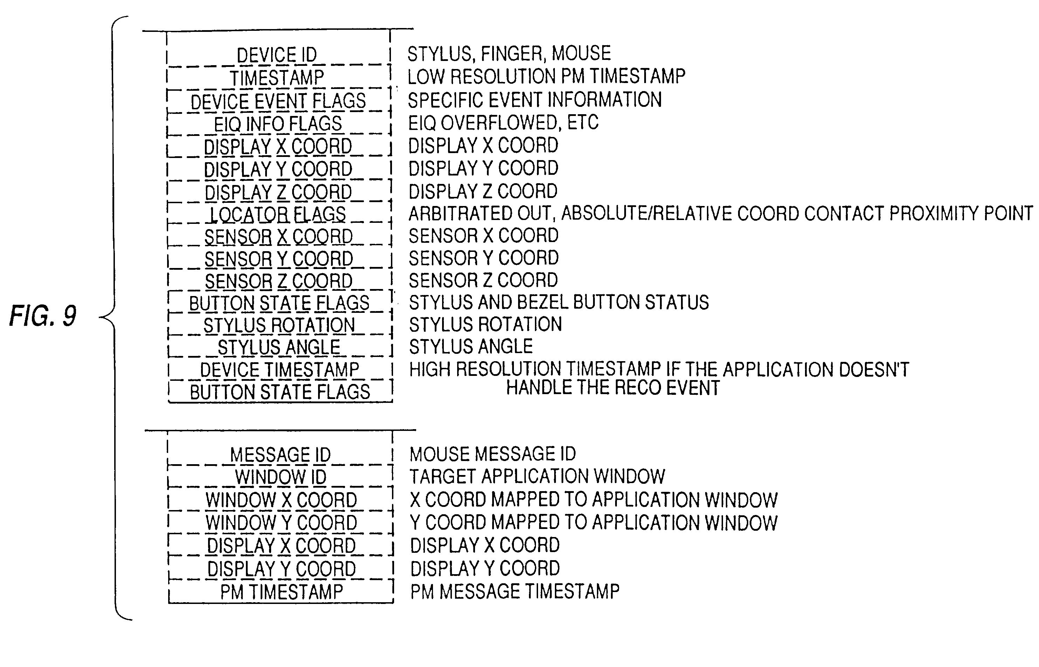

Fig. 2 shows an architectural diagram of the finger touch and stylus detection system. The system depicted in Fig. 2 is very to that disclosed in the U.S. patent 4,686,332 in Fig. 9. Also, the touch control processor 30, random access memory 32, read only memory and the I/O controller 36 are on a touch panel adapter card 37 in a personal computer while the rest of the touch electronics are integrated in the touch workpad 10. As discussed in connection with Fig. 1, the touch workpad 10 communicates with the personal computer and touch panel adapter card 37 via cable 28. The vertical X conductors are connected through the X bus 38 and the horizontal Y conductors are connected through the Y bus 40 to the wire selection multiplexer 42, respectively. The radiative pickup stylus 20 is connected through the gate 44 to the radiative pickup measurement device 46. The wire selection multiplexer 42 is connected through the mode multiplexer 50 to the capacitance measurement device 52 which is used for capacitance finger touch detection. The wire selection multiplexer 42 is also connected through the mode multiplexer 50 to the 40 KHz oscillator driver 54 which is used to drive the X bus 38 and the Y bus 40 for the stylus detection operation. The mode multiplexer 50 also has an enabling output to the gate 44 to selectively connect the output of the stylus 20 to the radiative pickup measurement device 46, for stylus detection operations. The output of the capacitance measurement device 52 is connected through the analog-to-digital converter 56 to the workpad bus 58. The output of the radiative pickup measurement device 46 is connected through the analog-to-digital convertor 48 to the bus 58. A control input 60 to the wire selection multiplexer 42 is connected to the bus 58. The control input 62 is connected to the mode multiplexer 50 from the bus 58.

The workpad bus 58 is connected via workpad interface 64 to the cable 28 which connects to PC interface 66 in the touch panel adapter card 37 in the personal computer. The PC interface 66 communicates to the main system bus 68 and to the adapter card bus 70. The I/O controller 36 has an I/O bus 72 which connects to the main bus 68 of the Personal Computer. The I/O controller 36 is also connected to adapter card bus 70. The adapter bus 70 also interconnects the control processor 30 with the read only memory (ROM) 34, and the random access memory (RAM) 32. The personal computer includes standard devices such as CPU 74, ROM 76, disk storage 78, a memory 80 which stores operating system 81 and application programs 82, a standard keyboard 84 and standard display 86. The standard display 86 is typically a CRT, and in the preferred embodiment is in addition to the LCD 18 in the workpad 10.

The wire selection multiplexer 42 and the mode multiplexer 50 connect selected patterns of a plurality of the horizontal and vertical conductors in the overlay 16 to either the capacitance measurement device 52 or the 40 KHz oscillator driver 54, in response to control signals applied over the control inputs 60 and 62 from the bus 58 by the control processor 30. During finger touch operations, the capacitance measuring device 52 has its input operations, the capacitance measuring device 52 has its input coupled through the mode multiplexer 50 and the wire selection multiplexer 42 to selected single conductors in the horizontal and vertical conductor array in the overlay 16 in response to control signals from the control processor 30. The output of the capacitance measurement device 52 is converted to digital values by the A/D converter 56 and is supplied over the bus 58 to the control processor 30. The control processor 30 executes a sequence of stored program instructions to detect the horizontal array conductor pair and the vertical array conductor pair in the overlay 16 which are being touched by the operator's finger.

The finger touch and stylus sensing modes operate independently of one another, the detection system cycling between the two modes until a finger touch or stylus is detected.

For example, most applications to date are written accept only keyboard an mouse input. A user could use the Advanced User Interface (AUI) to utilize a touch sensor without modifying any of an application's code which was originally written to accept only mouse and keyboard input. In one preferred embodiment, AUI is stored in RAM 80 with the operating system 81 and the application programs 82.

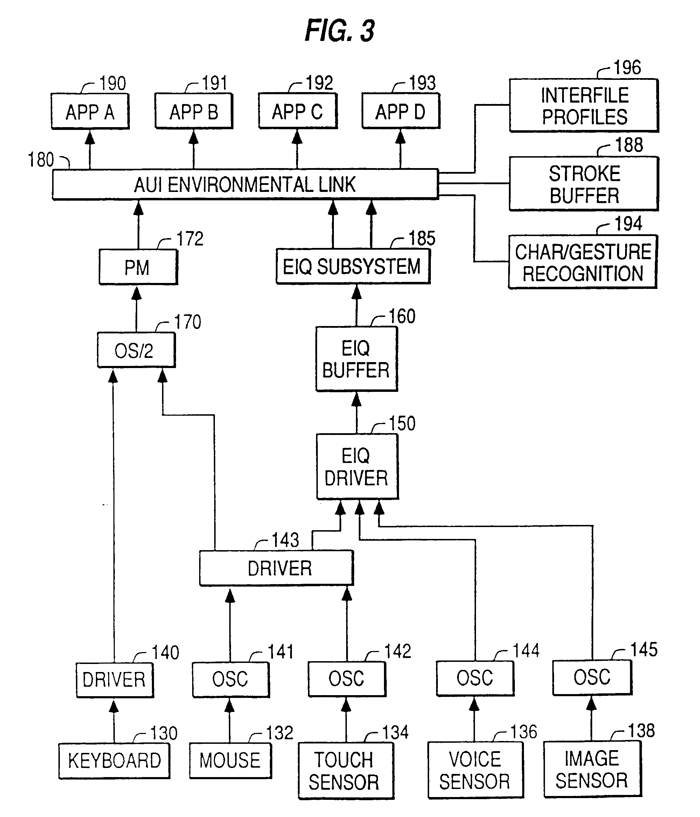

Fig. 3 depicts several peripheral input devices 130-138 along with the appropriate device specific code modules 141-145. The keyboard 130 is handled by keyboard device driver 140 and the pointing devices 132 and 134 are handled by unified pointing device driver 143. The EIQ driver 150 accepts input message from the pointing device driver 143 and the device specific code 144, 145 for the voice and image sensors 136, 138. Any driver or device specific code installed in the operating system may register itself with the EIQ device driver 150 at which time the device capabilities and type of EIQ entry it logs are made known to the EIQ driver 150. Once a device has registered, it may write device specific entries into the EIQ buffer 160 for subsequent retrieval by the AUI environmental link layer 180 or applications 190-193 via requests made to the EIQ subsystem 185. The EIQ driver 150, the EIQ buffer 160 and the EIQ subsystem 185 correspond to an improved version of the Alternative Input Subsystem (AIS) in the 344,879 application. Some aspects of the AIS also accomplished by the pointing device driver 143.

Keyboard and pointing device events are also passed to the OS/2 operating system 170 for enqueueing onto its input queue prior to receipt by the intended application. As the operating system will only accept mouse or keyboard data, all of the data from the touch sensor 134 is translated to a "mouse" message by the pointing device driver 143 before being sent to the operating system input channel. The touch data is sent to the EIQ channel with its full complement of data types. Among the data that can be stored in the EIQ buffer 160 include the following:
X/Y coordinates at display resolution,
X/Y coordinates at sensor resolution, much higher than display resolution.

The ID of the pointing device that generated the coordinates (e.g finger, stylus),
High resolution timestamps,
Events from buttons mounted on the display bezel,
Detection of the stylus entering or leaving the proximity zone,

Events from buttons mounted on the stylus,
Tilt, rotation, and attitude of the stylus,
Z-axis or pressure data,
Acceleration data,
Data stored in a personal stylus,
Display status such as backlight state and grey scale mappings,

Video status such as the current video mode.

As applications 190-193 dequeue "mouse" messages from the PM input queue, AUI 180 intercepts the messages before the applications 190-193 receive them and requests the EIQ subsystem 185 to retrieve all EIQ events that correspond with the current message. This enables the AUI layer 180 to obtain all pointing events reported by the pointing device which may have been discarded by PM 172 due to the coalescing of mouse events. As EIQ events are dequeued, the coordinate and all associated data are moved into the stroke buffer 188 and the entire stroke is made available to the applications 190-193 at liftoff or mouse button up time.

The AUI environmental link 180 sublayer is also coupled to character/gesture recognition subunit 194 which provides recognition facilities to applications unable to process a particular stroke and interface profiles 196 which map new input against corresponding commands for which the applications 190-193, operating system 170 and presentation manager 172 were originally written.

The EIQ buffer 160 has sufficient storage to buffer 1024 events. As entries are written into the EIQ buffer 160, each event is given a unique timestamp. The granularity of the timestamp is one millisecond which enables the buffering of up to 1000 events per second. The timestamp assigned by the EIQ driver 150 is the same timestamp given to the PM message passed to the PM input queue. This is critical since the message dequeued from the PM input queue must be matched up with its corresponding entry in the EIQ buffer 160. It also preserves the chronological order of all input events.

With multiple input devices 130, 132, 134, 136, 138 connected to the operating system 170, it is possible to receive input events from multiple devices simultaneously. The EIQ driver 150 acts as an arbitrator and assigns each pointing device a priority. When simultaneous entries are made by two or more devices, the EIQ driver 150 marks the EIQ entries of the lower priority device with a flag that will alert AUI 180 that the device was arbitrated out and should not be accepted as valid input.

As the EIQ buffer 160 will include all the input events, both mouse and stylus events can be included if the user is moving both simultaneously. Thus, to avoid confusion, the preferred embodiment contains the option of arbitrating one of the pointing devices out so that pointing events from the extraneous pointer are not passed with the events of the valid pointer to the application.

Another limitation of multi-tasking operating systems is task pre-emption where tasks of higher priority temporarily interrupt the currently executing program. Task pre-emption is especially disruptive to stroke input because the inking trail is temporarily halted and the user must continue to write with the stylus without the visual feedback of inking. It also causes inadvertent timeouts to occur when the user is inking a gesture because AUI maintains a delay timer waiting for the user to either complete the gesture or stop moving the stylus to distinguish touch input intended as a mouse command and that as a gesture. Since the pre-emption effectively causes AUI to stop processing points, the delay timer never gets reset and a timeout occurs. To the AUI software, it appears as if the user held the stylus motionless to force a timeout and enter mouse emulation mode.

In cases of lengthy pre-emption, it is possible to write several strokes before control returns to the original program and points are again processed. It is vital that all stroke data be preserved across such interruptions and be presented to the interrupted application in such a way that the interruption becomes transparent to the application.

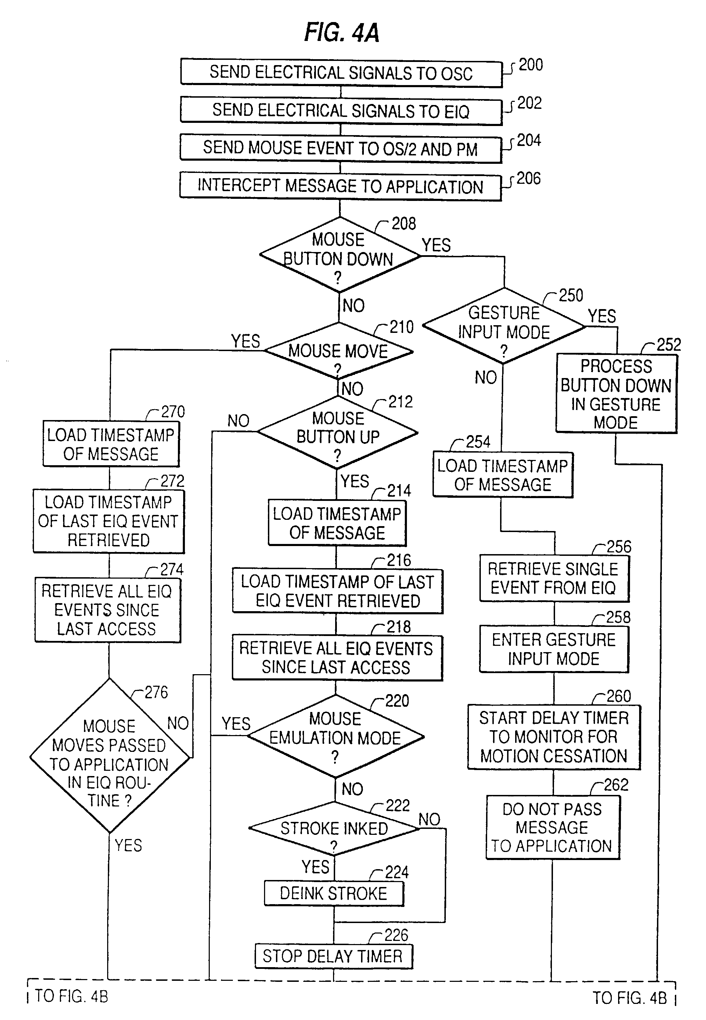

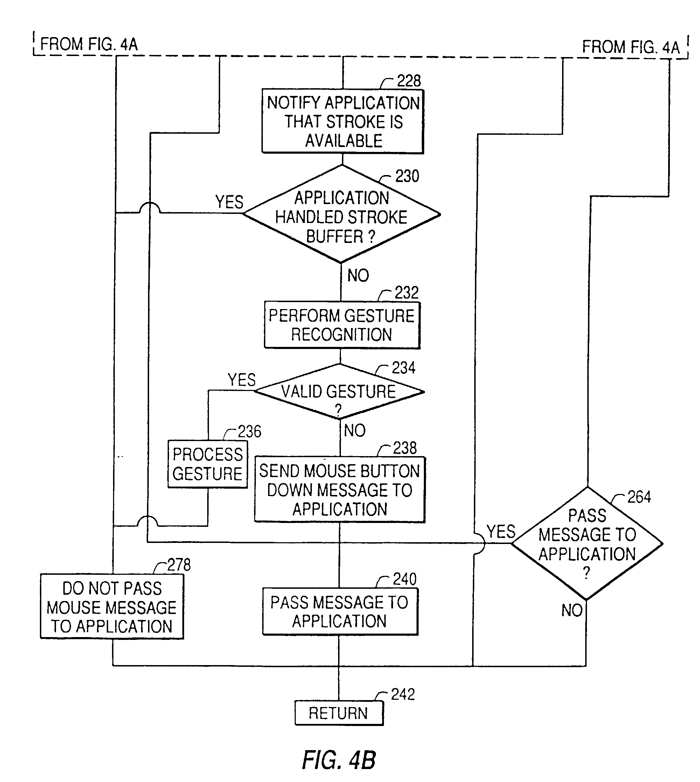

Fig. 4 is the main routine of the AUI subsystem where all PM messages are intercepted at 206. Fig. 4 also depicts three preliminary steps where the electrical signals from the input device are processed by the device specific code 141-145 at 200 into input messages recognizable to the pointing device driver 143 which converts all pointing messages into "mouse" messages as the latter are understood by OS/2 170 and PM 172. The "mouse" messages are sent at 204 and processed through the operating system 170 and integrated operating environment 172. In one preferred embodiment, only "mouse" messages are processed by the method of this invention, it assumed that all data which requires a timestamp to keep it in chronological order is converted into a mouse message to pass through OS/2 170 and PM 172. All other PM messages, e.g., keyboard, are passed through directly to the application with minimum delay. In the normal mode of operation, applications dequeue mouse messages from the PM input queue as the events occur. The AUI environmental link 180 then gets control and dequeues the same event from the EIQ buffer 160 and stores it in the stroke buffer 188. Under ideal conditions, there is a one to one relationship between PM input queue and EIQ events. However, if an application is slow in retrieving messages, some messages may be discarded which means that there will be more than one and possibly several EIQ events to dequeue. Several illustrative examples are discussed below to aid in understanding.

EXAMPLE 1: A normal scenario for processing a single stroke on the touch sensor 134 is illustrated in Figs. 4-8. In this example, a user makes a gesture such as a right arrow gesture on the touch sensor 134 by either finger or stylus which is equated by the computer system either by AUI or by an application which is "aware" of touch input as a command to perform some specified action. A mouse button down message is intercepted at 208. Since initially the system is not in gesture mode, at 250, it is treated as the beginning of a new stroke. The PM message timestamp is loaded at 254 and the event is retrieved from the EIQ buffer 256. AUI then enters a gesture mode state 258 and starts the delay timer 260 to detect the cessation of motion. If the user desires mouse emulation instead of a gesture, the user will stop motion of the pointing device for 200 milliseconds. Since mouse emulation is delayed while the system is in gesture mode, the mouse button down is not passed on to the application 262. As the user moves the pointing device, the touch moves are reported to the operating system 170 as a series of PM mouse move messages.

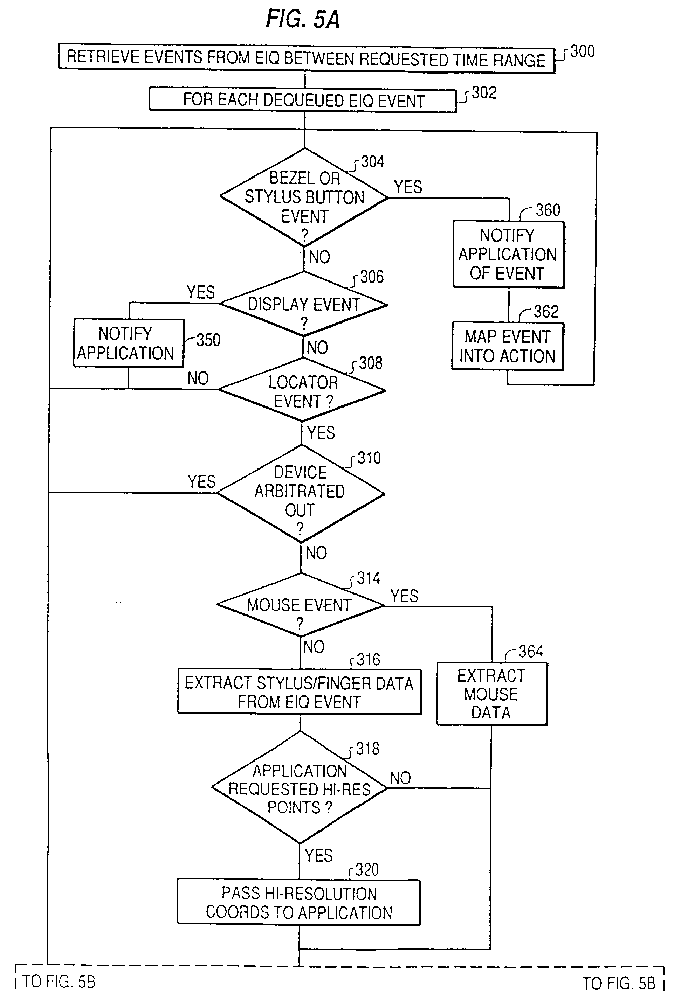

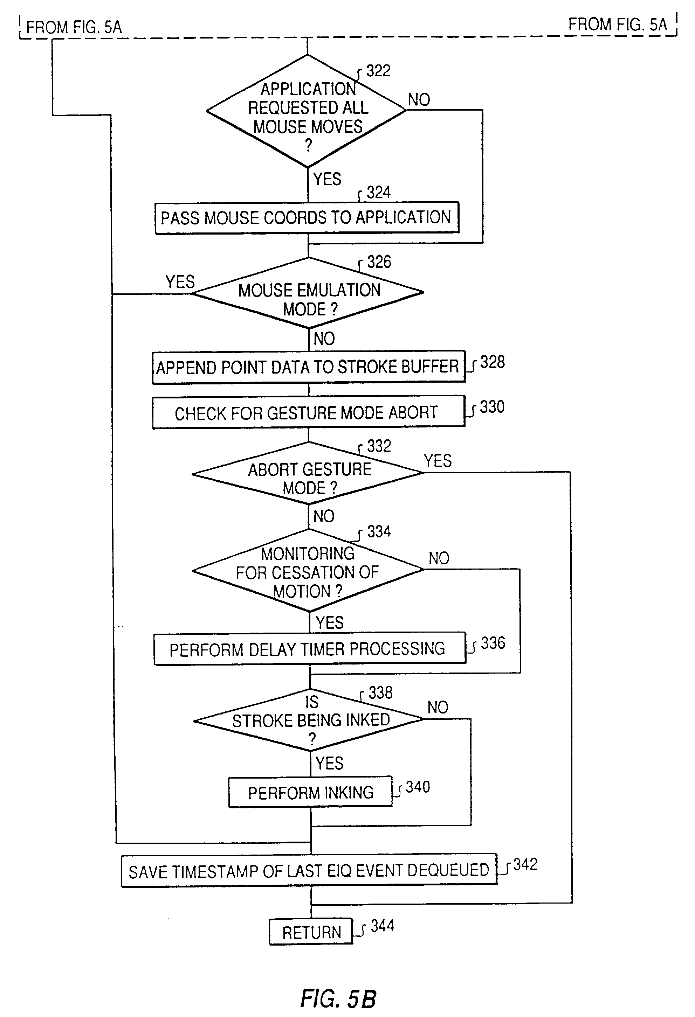

As these move messages are filtered at 210, the timestamp of the "mouse" move message at 270, the EIQ timestamp of the last EIQ event retrieved the associated EIQ events are retrieved 274. Fig. 5 illustrates the EIQ processing routine. When mouse moves are dequeued, they are retrieved by timestamp range at 300. The beginning timestamp is the time of the last retrieval plus 1 ms, and the ending timestamp is the timestamp of the current PM "mouse" move message. This ensures entries are dequeued only once and that no entries are skipped over when retrieving contiguous entries. Since an entry can originate from multiple devices, the event is run through filters 304-310 to ensure it is a locator event that has not been arbitrated out. Thus, at 304 a test is made whether the event is a stylus or bezel button event, at 306 whether the event is a display event, at 308 whether it is a locator event and at 310 a test is made whether the event is a locator device which has been arbitrated out. After the filters, the entry is tested at 314 to differentiate between a mouse device and a high bandwidth device such as a finger touch or stylus.

All device data is extracted from the EIQ entry depending on whether it is a mouse at 364 or finger/stylus at 316. In the case of finger/stylus, the entry contains the coordinates expressed in sensor resolution which are immediately passed to the application at 320 if the application so requested at 318. Similarly, an application may request to receive all pointer moves at mouse resolution at 322, in which case the display resolution coordinates are sent at 324.

An application typically requests to receive all points if there is a need to process the pointer moves real-time. An example of this is an application that does its own inking. For an unaware application, the user may specify to AUI via an application profile for the unaware application that is to receive all points real-time. In addition to receiving the points real-time, the application is assured of receiving all points in the stroke. This is the preferred way an application can recover mouse moves discarded by PM 172. Otherwise, an application must wait until liftoff or button up time to retrieve the stroke buffer 188 which contains all mouse moves. The benefit of this is a user can designate an existing application to receive all points without having to modify the application software.

In Fig. 5, once the device specific data has been processed, a test is made to determine if AUI is in mouse emulation mode at 326. If so, no further processing is done and the next EIQ event is handled. If not, AUI is in gesture mode which requires the stroke buffer 188 to be updated with the current point at 328. A quick check for aborting gesture mode at 332, delay timer processing at 336, and inking of the current point at 340 are performed.

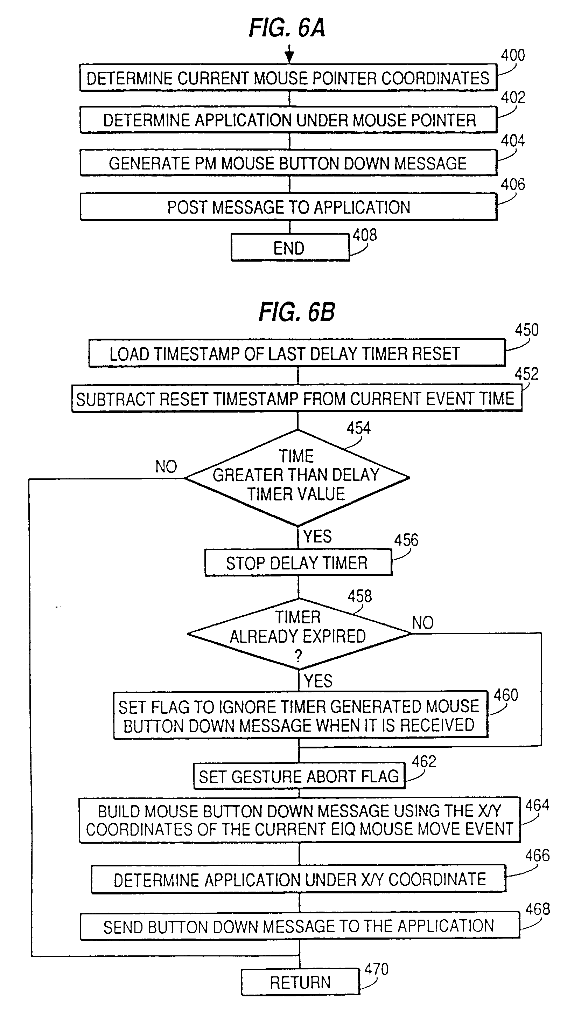

The check for aborting gesture mode is detailed in Fig. 6B. After the timestamp of the last delay timer reset is loaded at 450, the timestamp of the current EIQ entry is subtracted from the current time 452. This result reveals how far behind in time the system is in processing EIQ events. EIQ events are normally retrieved quasi real-time so a large difference in time indicates that the system is behind because it has been busy executing programs of higher priority while the events were being enqueued in the EIQ buffer 160. In this scenario, pre-emption has not occurred so the test at 454 fails and the routine returns at 470.

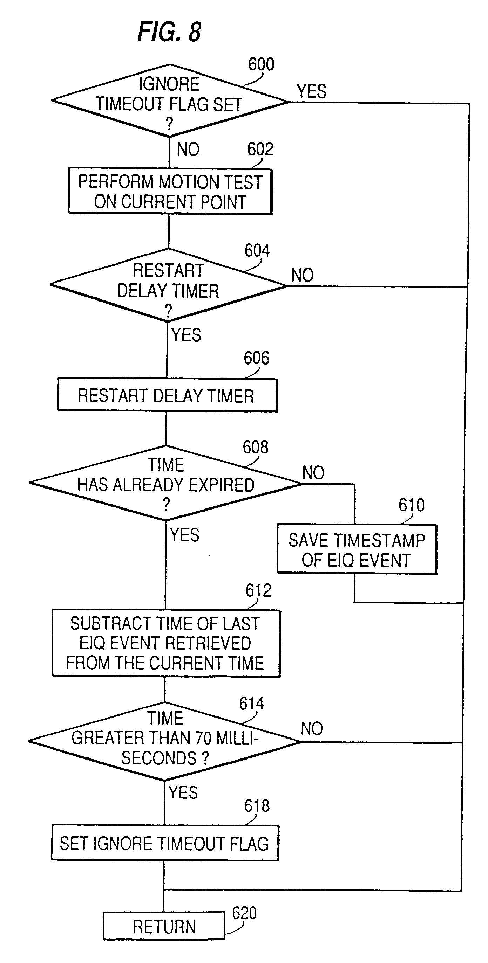

Delay timer processing is depicted in Fig. 8. First, a test is performed at 600 whether the ignore timeout flag is set. The coordinates in the current EIQ entry are examined for movement at 602. If the delay timer needs to be restarted at 604, it is restarted at 606 and a test is made to ensure the timer has not already expired at 608. If the timer was successfully restarted the timestamp of the current entry is stored at 610 as the time of the last timer restart and the routine exits at 620.

Referring back to Fig. 5, after inking the current point at 340, the loop at 302 is continued until all dequeued EIQ entries are processed. When the loop is exited, the timestamp of the last entry handled is saved at 342 to be used later for the detection of pre-emption. The EIQ routine then exits to 276 in Fig. 4 where a test is made to see if mouse moves were passed to the application in the EIQ routine. If so, the current PM mouse message is not passed to the application at 278 since it has already received it. Lastly, a return is made to PM at 242.

Eventually, a mouse button up message is intercepted at 212 indicating the end of the stroke. Stylus lift-off from the touch sensor is emulated by a mouse button up message by the pointing device driver 143. After the timestamp of the message is loaded at 214 and the timestamp of the last EIQ event is retrieved at 216, the call is made to the EIQ routine at 218 to retrieve the last of the mouse events up to and including the button up event. Since AUI has determined that the touch input is a gesture, the stroke is deinked at 222, the delay timer is stopped at 226, and the application is given the chance to query the stroke buffer at 228. "Deinking" the stroke is removing the "ink trail" displayed by the stylus or finger moved across the touch sensor to provide visual feedback to the user. If the application does not handle the stroke in the stroke buffer 188, gesture recognition is performed at 238. If the stroke was recognized as a valid gesture the gesture is mapped to a user specified action at 236 in the interface profiles 196. If the stroke was not a recognized gesture, mouse emulation is performed at 238 by generating a "mouse" button down message at the last location of the stroke "mouse" and sending it to the application. The current button up message is then allowed to pass through to the application at 240. In the case of a valid gesture at 236, no mouse emulation is performed and the button up message is discarded at 278. This completes the description of a standard gesture input scenario.

EXAMPLE 2: The next scenario of importance is the user touching down on the touch sensor 134 with finger or stylus and holding at a given location to enter mouse emulation mode. Similar to the first scenario, a mouse button down event and mouse moves are received and appended to the stroke buffer 188 and the delay timer is started. However, the user holds the pointing device motionless which causes the generation of mouse moves to cease. After 200 milliseconds of no motion, the delay timer expires. Referring to Fig. 6A, the current mouse location is queried at 400 and the target application is determined at 402 by a query to PM 172. A PM mouse button down message is generated at 404 and posted to the application at 406. When the application dequeues the posted button down message, it is intercepted at 208 by AUI which is already in gesture mode at 250 and the button down handler is called at 252.

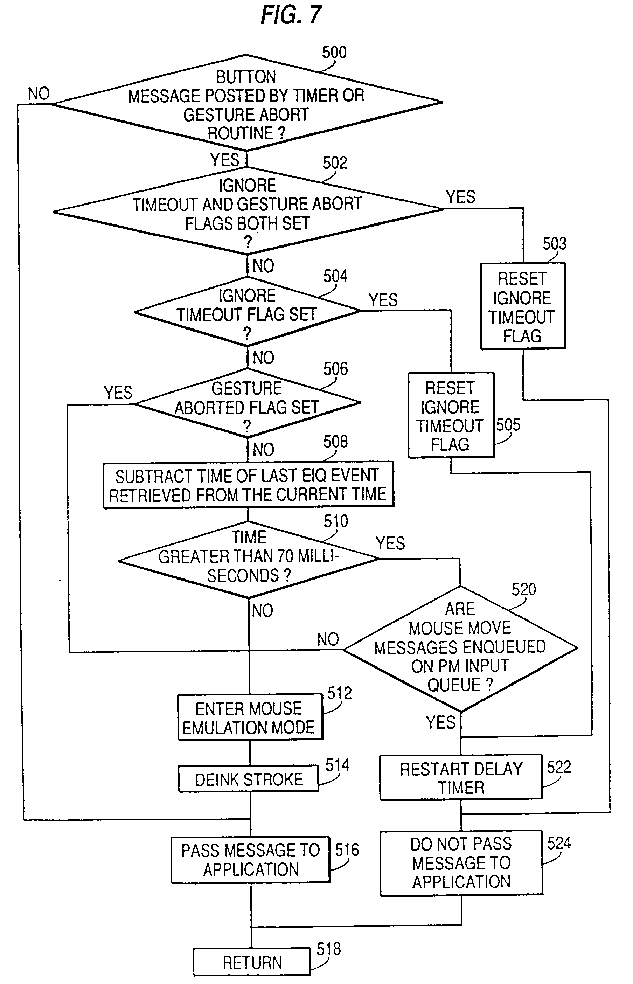

Referring to Fig. 7, the posted button down is tested to ensure it was posted by the timer routine at 500. A series of tests for pre-emption are conducted. At 502, a test whether both the ignore the delay timer timeout and gesture abort flags are set is performed; at 504, a test whether the ignore the timeout flag is set is conducted. At 506, a test whether the gesture abort flag is set is conducted. The use of the flags are discussed below in conjunction with further examples. In this scenario, no pre-emption occurred so the tests for pre-emption flags at 502, 504, and 506 all fail and execution falls through to 508 where the last EIQ event time is subtracted from the current time. Since the user held still and there were no mouse moves, the last EIQ fetch time is greater than 70 milliseconds. This has the appearance that the application may have been pre-empted, however the PM input queue is examined 520 for mouse events and none are found. The absence of PM mouse events is the reason that no EIQ fetches have occurred recently. If there had been events on the PM input queue, it would have been assumed that the reason the system had not yet dequeued them is task pre-emption. Since no pre-emption occurred, the test at 520 fails and mouse emulation mode is entered at 512. The stroke is deinked at 514 and the posted button down message is allowed to pass to the application.

The next several examples are all based on the two above scenarios in EXAMPLES 1 and 2, with the exception that pre-emption occurs which disrupts the normal mode of processing. The severity of pre-emption varies from brief, inconsequential interruptions of tens of milliseconds to complete system deadlock lasting several seconds. It should be noted that the test for pre-emption at 510 in Fig. 7 and at 614 in Fig. 8 is determining that no EIQ events have been retrieved for 70 milliseconds. The value of 70 ms is used due to the 32 ms granularity of the OS/2 system timer. Since the timer is only incremented every 32 ms, testing for a change of 70 ms ensures that at least 64 ms and as much as 95 milliseconds have elapsed. In other words, given a point generation rate of 125 points per second for the stylus, this equates to 8-12 pointer moves that have buffered in the EIQ buffer 160, but discarded by PM 172.

EXAMPLE 3: A user touches down on the touch sensor 134 and moves the stylus across the sensor for several seconds before lifting off. In the middle of the stroke, the application was pre-empted for 150 milliseconds. What the user saw was a brief interruption of the ink trail where the stylus momentarily got ahead of the inking by 2-3 inches before the inking again caught up with the tip of the stylus. A short period of pre-emption such as this is innocuous and has no deleterious effect on AUI or application processing. The only indication pre-emption occurred is the interruption of the ink trail. This example is very similar to EXAMPLE 1 except that when the first "mouse" move after pre-emption is intercepted at 210, there are 18 touch moves (150 ms/8ms per mouse move = 18) in the EIQ buffer 188. This simply means the main loop of the EIQ routine 302 will iterate 18 times adding all the points the stroke buffer at 328, restarting the delay timer as needed at 336, and inking the points at 340. The time to process all the points in this loop at 302 is very short which is evident to the user by the rapid inking of the outstanding points.

EXAMPLE 4: A user touches down and moves the stylus for several seconds before lifting off. In the middle of the stroke, the application was pre-empted for 300 milliseconds. The user sees a much longer interruption of the ink trail where the stylus is ahead of the inking by 4-6 inches before the inking again caught up with the tip of the stylus. A long period of pre-emption such as this causes problems, since no points were processed for 300 ms, the delay timer could not be restarted and a timeout occurs. This timeout would cause AUI to enter mouse emulation. The effect on the user interface would be a gesture which was terminated in mid-stroke.

Referring to FIGs. 6A and 4, the "mouse" button down message generated by the timer routine at 406 is intercepted by AUI at 208. AUI is in gesture mode as the gesture was in process before pre-emption occurred, so the test at 250 is positive and the message is routed to the button down processor at 252. The button down appears to be normal, and since no pre-emption flags are set the process drops through the tests at 502, 504 and 506 AUI subtracts the last EIQ time from the current time at 508. The result is 300 ms, which causes AUI to examine the PM input queue at 520. Since the user never stopped moving, "mouse" moves are in fact enqueued on the PM input queue, signifying pre-emption had occurred. The delay timer is restarted at 522 and the button down message is discarded at 524 which keeps AUI in gesture input mode.

Returning to the EIQ routine in Fig. 5, the application then dequeues a "mouse" move from the PM input queue at which time AUI retrieves at 300 the 37 pointer moves (300 ms/8ms per mouse move = 37) buffered in the EIQ buffer 160. These touch moves are processed very rapidly as in the previous example and the inking again catches up with the stylus.

EXAMPLE 5: This scenario is the same as that in EXAMPLE 4 with the exception that the pre-emption occurred while AUI was processing mouse moves. Again, during this interruption the delay timer expired. For clarity, assume processing was pre-empted at the top of the EIQ loop at 302 in Fig. 5. When execution resumes, AUI continues to process the mouse moves dequeued from the EIQ buffer 160. The processing continues as normal until the delay timer processing is performed at 336. As shown in Fig. 8, the point is tested for motion at 602 and the timer is restarted at 604. However, the delay timer fails to restart because it has expired and is no longer active at 608. Upon failure, the time of the last EIQ event is compared to the current time to test for pre-emption at 614. The result is 300 ms which causes the 'ignore timeout' flag to be set at 618. The rest of the EIQ events are processed and when the delay timer routine is again called, the 'ignore timeout' flag is set at 600 which causes the routine to exit at 620 without attempting to reset the delay timer. AUI finally processes the last EIQ event and passes the message to the application at 240. At this time, there are two "mouse' messages on the PM input queue, a "mouse" move (representing 37 touch moves) and a posted "mouse" button down. Although the "mouse" moves occurred before the mouse button down, a posted message has higher priority, so the button down is the first message dequeued by PM 172. The button down is intercepted at 208 and processed at 252. In the button down routine, the 'ignore timeout' and the 'gesture abort' flags are both tested to see if they are both set at 502. Since only the 'ignore timeout' flag is set, the code falls through and tests true on the next test at 504. The flag being set here means AUI itself was interrupted and the delay timeout was bogus. The 'ignore timeout' flag is reset at 505 and the delay timer is restarted at 522. The button down message is then discarded at 524 so that AUI remains in gesture mode.

The period of time AUI is vulnerable to pre-emption as depicted above seems quite short, however, in practice it occurs frequently. This is because pre-emption often occurs in a series of bursts. During the first burst, several pointer moves accumulate in the EIQ buffer 160. When they are dequeued, AUI processing is confined to the main EIQ loop at 302 in Fig. 5 for an extended period of time handling each mouse move. It is during this prolonged EIQ processing that the second or third burst of pre-emption often occurs. Each instance of pre-emption causes pointer moves to build up in the EIQ buffer 160 so it is simply a matter of time before the two events coincide.

EXAMPLE 6: In this example, a user touches down on the touch sensor 134 with the stylus, pauses briefly to enter mouse emulation mode. The user then moves the stylus to drag a selected graphic object across the display and finally lifts off having positioned the object. Pre-emption interrupted the application for 500 milliseconds while the user was pausing at the graphic object. This creates a problem. When AUI dequeues all sixty buffered pointer moves, it takes approximately 60 milliseconds to process them. In the middle of the sixty pointer moves, the user was motionless for 30 of them which should have caused the delay timer to expire. However, since all the pointer moves were processed in 60 ms, the delay timer did not have a chance to expire as it normally would have if the pointer moves had been processed over the 500 millisecond period. So the period of stability is not seen and movement is again detected which restarts the timer. AUI remains in gesture mode instead of entering mouse emulation mode as intended by the user. This problem is further exacerbated by the fact that during the 500 millisecond pre-emption, the delay timer expired, so there is also a timer posted "mouse" button down message in the PM input queue which must be handled.

When control returns, the first PM message dequeued is the posted "mouse" button down. As outlined in EXAMPLE 4, the pre-emption is detected and the timer is restarted and the button down message is discarded. In Fig. 4, the PM "mouse" move message is processed and intercepted by AUI at 210. In the EIQ main loop at 302 in Fig. 5, sixty pointer moves are retrieved from the EIQ buffer 160 and a call is made to check for a gesture abort flag at 330 for each entry. The timestamp of the last valid timer restart (Box 610 in Fig. 8) is loaded at 450 and subtracted from the timestamp of the current EIQ entry at 452. The result is compared against the delay timer value 454 which is 200 milliseconds. The result should never be greater than the delay timer unless pre-emption occurred and numerous EIQ entries are being processed. Since the user had stopped for 200 ms in the middle of the stroke, the timer restart time does not increment. Eventually, the restart time will test true at 458. This is the point at which AUI would have entered mouse emulation mode if pre-emption had not occurred. It is also possible for the timer to expire while handling a large number of pointer moves at 458. If so, the 'ignore timeout' flag is set to discard the timer posted button down message in the PM input queue at 460. A 'gesture abort' flag is then set at 462 and a mouse button down message is built using the X/Y coordinates of the current EIQ entry at 466. This message is posted to the application under the coordinate at 468 and a return at 470 is made to the EIQ routine in Fig. 5. When the test for 'gesture abort' tests true at 332, the remainder of the EIQ entries are not processed and a return at 344 is made to the mainline AUI code in Fig. 4.

At this point, there may be two "mouse" button down messages in the PM input queue. One posted by the timer at 406 and one posted by the gesture abort routine 468. If there is a timer generated button down message in the queue, it is handled first since it occurred first. When handled by the process mouse button down in gesture mode process in Fig. 7, both the 'ignore timeout' and 'gesture abort' flags are set at 502 so the 'ignore timeout' flag is reset and the button down message is discarded at 524. The timer is not restarted. Returning to Fig. 4, the second button down message is now intercepted at 208 and since AUI is still in gesture mode at 252, the second button is processed. Again in Fig. 7, the only flag set is 'gesture abort' at 506 the branch is taken to enter mouse emulation mode at 512 and deink the stroke at 514. The message is passed on to the application at 516 and a mouse button down occurs where the user stopped for 200 milliseconds.

A common feature of operating systems that support a keyboard and/or mouse is 'type-ahead' and 'mouse-ahead'. These capabilities allow the user to begin to type on the keyboard and/or click with the mouse even though the active application may be in a pre-empted or busy state where user input cannot be handled. The system preserves the order of keyboard and mouse events such that when the application(s) becomes ready to again receive user input, the events are received in the original sequence and are routed to the proper windows. This capability permits user input to continue through periods of system overload and effectively makes system unavailability somewhat transparent. It also permits an expert or 'power' user to anticipate the activation of a window or text field and begin typing before the window or field is enabled for input.

A major deficiency of the mouse ahead feature is that the mouse is strictly a locator device and the system only buffers mouse button clicks and a single mouse move in between. All points received during movement of the mouse are coalesced if the application is busy and only the last point received is passed to the application when it starts accepting user input again. This precludes the ability to stroke a gesture when pre-emptive threads are active in the background. A method for preventing the loss of such data. For touch screen devices, this represents the loss of information rich stroke data which seriously degrades the performance of the finger or stylus as an input device.

Employing all the above techniques, AUI implements a third capability known as 'stroke ahead' where all the finger,stylus and/or mouse clicks and movements are buffered during periods of pre-emption, then played back to the application as if there had been no delay. Buffering is currently sufficient to store 8 gestures or 10 seconds of handwriting across very long periods of pre-emption. In addition, this stroke ahead capability permits common graphical user interface techniques such as point and drag, re-sizing and movement of windows, selection, and double clicking to be executed without regard to application readiness.

Fig. 9 compares the EIQ data block found in the EIQ buffer with the corresponding entry in the operating system input buffer. The PM "mouse" message has only a limited amount of information. It includes the message ID and the target window ID as well as the X-Y coordinates within the target window to which the "mouse" message is addressed. Further, it contains the X-Y coordinates on the display to which the mouse pointer will be mapped and the PM timestamp indicating when the "mouse" event was sent to the operating system.

The operating system (PM) timestamp is used to correlate the EIQ data block to its corresponding PM "mouse" message. As the "mouse" message already contains the window information, it does not need to be included in the EIQ data block, although it could be included if desired. The data in the EIQ data block is intended to be illustrative rather than exhaustive or exclusive. Among the data included is the device identity, device specific information which can be handled by an aware application, flags indicating the state of the EIQ buffer, the display coordinates, the higher resolution touch sensor coordinates, stylus rotation and angle, and high resolution device timestamps. Depending on the input device some of the entries may not be available and so are left blank in the EIQ data block.

### Button and other Input Device Events

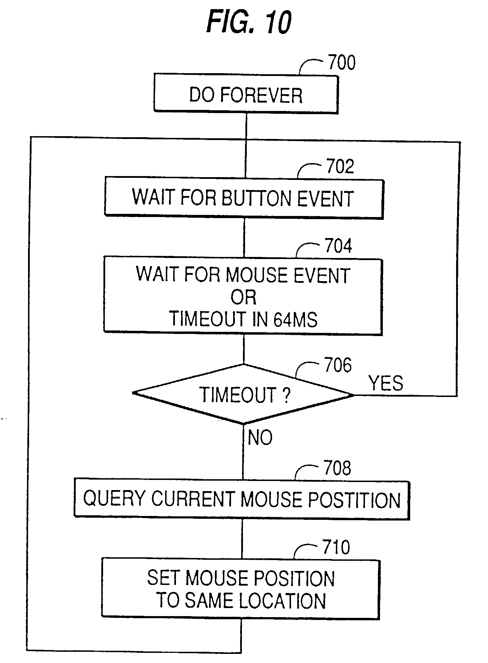

When incorporated into tablets such as the Workpad depicted in Fig. 1, buttons, both bezel and stylus, significantly enhance the human factors and useability. These events are written into the EIQ buffer 160 by the appropriate device driver, however, since these are not pointer events and are not translated to false "mouse" events by the pointing device driver, they are not enqueued into the PM input queue and consequently, applications do not receive notification that they occurred. The AUI subsystem 180 circumvents this operating system limitation by creating a separate task or thread of execution 700 in Fig. 10 that has the sole function of monitoring for button events in the EIQ buffer 160. As the button events occur, the thread is dispatched to handle the event, at which time the application is sent a PM message containing the event information. Separate threads are similarly written to provide notification of voice events from the voice sensor 136 and image events from the image sensor 138.

Referring to Fig. 10, during system initialization, the thread is created and it enters a permanent loop at 700 to monitor EIQ button events. The loop begins by calling the EIQ subsystem 180 to dequeue a button event at 702. Implicit in this function call is a request to halt the execution of the thread if there is not a button event in the EIQ buffer 160. This 'wait state' will only be satisfied by the enqueueing of a button event into the EIQ buffer 160. When a button event is enqueued into the EIQ buffer 160 by a device driver, the thread is immediately re-dispatched and execution resumes.

Once it is determined that a button event exists in the EIQ buffer 160, the button must be handled in the proper order. The button event may be the only event in the EIQ buffer 160, but it also may be in the middle of a long series of pointer moves if the user pressed the button in the middle of a stroke. If the button was pressed mid-stroke, it must be handled chronologically, preserving the exact order of pointer moves and button events. As the PM "mouse" moves are intercepted at 210 in Fig. 4 and processed by the mainline AUI routine, the button event will eventually be identified at 304 in EIQ routine in Fig. 5 and processed at 360 and 362. However, if the button event is a solitary EIQ entry, there will be no PM input queue message to trigger AUI, and the event will never be dequeued.

Therefore, once the button monitor thread is re-dispatched, the thread immediately issues a request to the EIQ subsystem 180 at 704 to retrieve the next pointer event that occurs. In the function call is the explicit request to halt execution until either a pointer event occurs or 64 milliseconds elapse. If a timeout did not occur at 706, then the button event coincided with a pointer event and it will eventually be dequeued and processed by the main EIQ loop at 302. No further processing is done and the loop restarts. However, if a timeout did not occur at 706, the current pointer position is queried at 708 and then changed at 710 using the same coordinates. Whenever the position of the pointing device is updated by software, PM enqueues a 'dummy' mouse move message into the PM input queue. When the application dequeues the "mouse" move, AUI intercepts it at 210 and the button event gets handled in the EIQ routine at 302. Since the location of the pointing device is not changed, the extraneous "mouse" move message generated by PM has no effect on application processing.

## Claims

1. In a data processing system having a central processor (30), a method for buffering high bandwidth data from an input device comprising the steps of:
buffering input data from the input device (130 - 138) in a first buffer (172) in a first format, wherein said first buffer has the property of discarding at least some of the input data during periods of high central processor utilization;
buffering the input data in a second buffer (160) in a second format including types of data not included in said first format, wherein said second buffer stores all input data regardless of central processor utilization;
determining whether input data have been discarded from the first buffer; and
responsive to the determination that input data have been discarded from the first buffer, retrieving the input data from the second buffer (160).

2. The method as recited in claim 1, wherein said input data are coordinate points representing the path of a pointing device across a surface of a touch sensor.

3. The system as recited in claim 2, wherein said determining step is accomplished by comparing the number of coordinate points in said first (172) and second buffer (160).

4. The system as recited in claim 1 to 3, wherein said determining step is accomplished by comparing a last timestamp associated with a last input data event processed by the data processing system and a current time.

5. The method as recited in claims 2 to 5, which further comprises the steps of:
determining whether the pointing device has stopped movement across the touch screen at a given coordinate point for a predetermined period of time;
responsive to the determination that the pointing device has stopped movement for the predetermined time, entering a mouse emulation mode.

6. The method as recited in claim 5, which further comprises the steps of:
determining whether the pointing device has stopped movement across the touch screen at a given coordinate point for a predetermined period of time;
responsive to the failure to find motion cessation before the pointing device is lifted from the touch screen, attributing the coordinate point as a gesture;
mapping the coordinate points to points representing known gestures to the data processing system; and
responsive to matching the coordinate point to a known gesture, sending a message indicating which message was made to an appropriate computer module.

7. A data processing system for buffering high bandwidth data from an input device (130-138), the system having a central processor (30) and a memory, comprising:
a first buffer (172) in the memory for buffering input data from the input device in a first format, said first buffer having the property of discarding at least some of the input data during periods of high central processor utilization; and
a second buffer (160) in the memory for buffering input data from the input device in a second format including types of data not included in said first format, the second buffer storing all the input data regardless of central processor utilization; and
means for determining whether input data have been discarded from the first buffer;
whereby if input data have been discarded from the first buffer, the input data are retrieved from the second buffer.

8. The system as recited in claim 7, wherein said input data are coordinate points representing the path of a pointing device across the surface of a touch sensor.

9. The system as recited in claim 8, wherein said determining means compares the number of coordinate points in the first and second buffer.

10. The system as recited in claims 7 to 9, wherein said determining means compares a last timestamp associated with a last input data event processed by the data processing system and a current time.

11. The system as recited in claims 7 to 10, which further comprises:
means for determining whether the pointing device has stopped movement across the touch sensor at a given coordinate point for a predetermined period of time;
responsive to the determination that the pointing device has stopped movement for the predetermined time, entering a mouse emulation mode.

12. The system as recited in claims 7 to 11, which further comprises:
means for determining whether the pointing device has stopped movement across the touch screen at a given coordinate point for a predetermined period of time;
responsive to the failure to find motion cessation before the pointing device is lifted from the touch screen, attributing the coordinate point as a gesture;
means for mapping the coordinate points to points representing known gestures to the data processing system; and
means for sending a message indicating which message was made to an appropriate computer module, responsive to matching the coordinate point to a known gesture.

## Patentansprüche

1. In einem Datenverarbeitungssystem mit einem Zentralprozessor (30) ein Verfahren zum Puffern von Hochbandbreitendaten aus einer Eingabevorrichtung, bestehend aus den folgenden Schritten:
Puffern der Eingabedaten aus der Eingabevorrichtung (130 - 138) in einen ersten Puffer (172) in einem ersten Format, wobei der erste Puffer die Eigenschaft hat, wenigstens einige der Eingabedaten während Perioden der Prozessorhochbeanspruchung auszusondern;
Puffern der Eingabedaten in einem zweiten Puffer (160) in einem zweiten Format, einschließlich Datentypen, die im ersten Format nicht eingeschlossen sind, wobei der zweite Puffer alle Eingabedaten speichert unabhängig von der Prozessorbeanspruchung;
Bestimmen, ob Eingabedaten aus dem ersten Puffer ausgesondert wurden; und
als Reaktion auf die Bestimmung, daß Eingabedaten aus dem ersten Puffer ausgesondert wurden, Abrufen der Eingabedaten aus dem zweiten Puffer (160).

2. Das Verfahren gemäß Anspruch 1, in dem die Eingabedaten Koordinatenpunkte sind, die den Pfad einer Zeigervorrichtung über die Oberfläche eines Berührungssensors darstellen.

3. Das Verfahren gemäß Anspruch 2, in dem der Bestimmungsschritt ausgeführt wird durch Vergleichen der Anzahl der Koordinatenpunkte im ersten (172) und im zweiten Puffer (160).

4. Das Verfahren gemäß den Ansprüchen 1 bis 3, in dem der Bestimmungsschritt ausgeführt wird durch Vergleichen eines einem letzten Dateneingabeereignis, das durch das Datenverarbeitungssystem verarbeitet wird, zugeordneten letzten Zeitstempels und einer augenblicklichen Zeit.

5. Das Verfahren gemäß den Ansprüchen 2 bis 4, das ferner die folgenden Schritte umfaßt:
Bestimmen, ob die Zeigervorrichtung ihre Bewegung über den Kontaktbildschirm an einem gegebenen Koordinatenpunkt für eine vorgegebene Zeitspanne angehalten hat;
als Reaktion auf die Bestimmung, daß die Zeigervorrichtung ihre Bewegung für eine vorgegebene Zeitspanne angehalten hat, Eintreten in einen Maus-Emulierungsmodus.

6. Das Verfahren gemäß Anspruch 5, das ferner die folgenden Schritte umfaßt:
Bestimmen, ob die Zeigervorrichtung ihre Bewegung über den Kontaktbildschirm bei einem gegebenen Koordinatenpunkt für eine vorgegebene Zeitspanne eingestellt hat;
als Reaktion auf das Nichtfinden einer Bewegungseinstellung bevor die Zeigervorrichtung vom Kontaktbildschirm abgehoben wird, Zuordnung des Koordinatenpunkts als Bewegung; und
Abbilden der Koordinatenpunkte auf Punkte, die bekannte Bewegungen zum Datenverarbeitungssystem darstellen; und
als Reaktion auf das Zuordnen des Koordinatenpunkts zu einer bekannten Bewegung, Senden einer Meldung, die angibt, welche Meldung an ein geeignetes Rechnermodul gegeben wurde.

7. Ein Datenverarbeitungssystem zum Puffern von Hochbandbreitendaten aus einer Eingabevorrichtung (130-138), wobei das System einen Zentralprozessor (30) und einen Speicher aufweist, enthaltend:
einen ersten Puffer (172) im Speicher zum Puffern der Eingabedaten aus der Eingabedatenvorrichtung in einem ersten Format, wobei der erste Puffer die Eigenschaft hat, daß er während einer Periode der Zentralprozessorhochbeanspruchung wenigstens einige der Eingabedaten aussondert; und
einen zweiten Puffer (160) im Speicher zum Puffern der Eingabedaten aus der Eingabedatenvorrichtung in einem zweiten Format einschließlich Datentypen, die im ersten Format nicht enthalten sind, wobei der zweite Puffer alle Eingabedaten speichert, unabhängig von der Beanspruchung des Zentralprozessors; und
Mittel zum Bestimmen, ob Eingabedaten aus dem ersten Puffer ausgesondert wurden;
wobei die Eingabedaten aus dem zweiten Puffer abgerufen werden, wenn Eingabedaten aus dem ersten Puffer ausgesondert wurden.

8. Das System gemäß Anspruch 7, in dem die Eingabedaten Koordinatenpunkte sind, die den Pfad einer Zeigervorrichtung über die Oberfläche eines Berührungssensors darstellen.

9. Das System gemäß Anspruch 8, in dem das Bestimmungsmittel die Anzahl der Koordinatenpunkte im ersten und im zweiten Puffer vergleicht.

10. Das System gemäß den Ansprüchen 7 bis 9, in dem das Bestimmungsmittel einen, einem letzten Dateneingabeereignis, das durch das Datenverarbeitungssystem verarbeitet wird, zugeordneten letzten Zeitstempel und eine augenblickliche Zeit vergleicht.

11. Das System gemäß den Ansprüchen 7 bis 10, das ferner umfaßt:
Mittel zum Bestimmen, ob die Zeigervorrichtung ihre Bewegung über den Kontaktbildschirm an einem gegebenen Koordinatenpunkt für eine vorgegebene Zeitspanne angehalten hat;
als Reaktion auf die Bestimmung, daß die Zeigervorrichtung ihre Bewegung für eine vorgegebene Zeitspanne angehalten hat, Eintreten in einen Maus-Emulierungsmodus.

12. Das System gemäß den Ansprüchen 7 bis 11, das ferner umfaßt:
Mittel zum Bestimmen, ob die Zeigervorrichtung ihre Bewegung über den Kontaktbildschirm bei einem gegebenen Koordinatenpunkt für eine vorgegebene Zeitspanne eingestellt hat;
als Reaktion auf das Nichtfinden einer Bewegungseinstellung Zuordnung des Koordinatenpunkts als Bewegung bevor die Zeigervorrichtung vom Kontaktbildschirm abgehoben wird; und
Mittel zum Abbilden der Koordinatenpunkte auf Punkte, die bekannte Bewegungen für das Datenverarbeitungssystem darstellen; und
Mittel zum Senden einer Meldung, die angibt welche Meldung an ein geeignetes Rechnermodul gegeben wurde, als Reaktion auf die Übereinstimmung der Koordinatenpunkte mit einer bekannten Bewegung.

## Revendications

1. Dans un système de traitement des données comportant un processeur central (30), un procédé de mise en tampon de données à bande large venant d'un dispositif d'entrée, comprenant les étapes consistant à :
mettre en tampon des données d'entrée issues du dispositif d'entrée (130 - 138) dans un premier temps (172), sous un premier format, dans lequel le premier tampon a la propriété d'éliminer au moins certaines des données entrées durant des périodes d'utilisation élevées du processeur central;
mettre en tampon les données d'entrée dans un deuxième tampon (160), sous un deuxième format comprenant des types de données non inclus dans ledit premier format, dans lequel ledit deuxième tampon mémorise toutes les données d'entrée, indépendamment de l'utilisation du processeur central;
déterminer si les données d'entrée ont été éliminées du premier tampon; et
en réponse à la détermination du fait que les données d'entrée ont été éliminées du premier tampon, récupérer les données d'entrée depuis le deuxième tampon (160).

2. Le procédé selon la revendication 1, dans lequel lesdites données d'entrée sont des points de coordonnées représentant le chemin d'un dispositif de pointage sur une surface d'un capteur tactile.

3. Le système selon la revendication 2, dans lequel ladite étape de détermination est exécutée par comparaison du nombre de points de coordonnées dans ledit premier (172) et ledit deuxième tampon (160).

4. Le système selon l'une des revendications 1 à 3, dans lequel ladite étape de détermination est exécutée en comparant la dernière date associée à un dernier événement de donnée d'entrée traité par le système de traitement de données et un instant actuel.

5. Le procédé selon les revendications 2 à 5, comprenant en outre les étapes consistant à :
déterminer si le dispositif de pointage a cessé son déplacement sur l'écran tactile, en un point de coordonnées donné, pendant une période de temps prédéterminée.
en réponse à la détermination du fait que le dispositif de pointage a cessé son déplacement pendant la durée prédéterminée, passer en mode d'émulation de souris.

6. Le procédé selon la revendication 5, comprenant en outre les étapes consistant à :
déterminer si le dispositif de pointage a cessé son déplacement sur l'écran tactile, en un point de coordonnées données, pendant une période de temps prédéterminée;
en réponse à l'absence de détection de la cessation du déplacement, avant que le dispositif de pointage ait été soulevé de l'écran tactile, attribuer le point de coordonnées à titre de témoin;
mapper les points de coordonnées sur des points représentant des témoins connus du système de traitement de données; et
en réponse à la coïncidence entre le point de coordonnées et un témoin connu, envoyer un message indiquant quel message avait été envoyé à un module d'ordinateur approprié.

7. Un système de traitement de données pour la mise en tampon de données à bande large à partir du dispositif d'entrée (130 - 138), le système ayant un processeur central (30) et une mémoire, comprenant :
un premier tampon (172) dans la mémoire, pour mettre en tampon des données entrées issues du dispositif d'entrée, sous un premier format, ledit premier tampon ayant la propriété d'éliminer au moins certaines des données entrées durant des périodes pendant lesquelles l'utilisation du processeur central est élevée; et
un deuxième tampon (160) dans la mémoire, pour mettre en tampon des données d'entrée issues du dispositif d'entrée, sous un deuxième format comprenant des types de données non inclus dans ledit premier format, le deuxième tampon stockant toutes les données d'entrée, indépendamment de l'utilisation du processeur central; et
des moyens pour déterminer si les données d'entrée ont été éliminées du premier tampon;
de manière que, si des données d'entrée ont été éliminées du premier tampon, les données d'entrée soient récupérées du deuxième tampon.

8. Le système selon la revendication 7 dans lequel lesdites données d'entrée sont des points de coordonnées représentant le chemin d'un dispositif de pointage sur la surface d'un capteur tactile.

9. Le système selon la revendication 8, dans lequel lesdits moyens de détermination comparent le nombre de points de coordonnées dans le premier et le deuxième tampon.

10. Le système selon les revendications 7 à 9, dans lequel lesdits moyens de détermination comparent la dernière date, associée à un dernier événement de données d'entrée traité par le système de traitement de données, et un instant actuel.

11. Le système selon les revendications 7 à 10, comprenant en outre :
des moyens pour déterminer si le dispositif de pointage a cessé son déplacement sur l'écran tactile, en un point de coordonnées donné, pendant une période de temps prédéterminée.
en réponse à la détermination du fait que le dispositif de pointage a cessé son déplacement pendant la durée prédéterminée, passer en mode d'émulation de souris.

12. Le système selon les revendications 7 à 11 comprenant en outre :
des moyens pour déterminer si le dispositif de pointage a cessé son déplacement sur l'écran tactile, en un point de coordonnées données, pendant une période de temps prédéterminée;
en réponse à l'absence de détection de la cessation du déplacement, avant que le dispositif de pointage ait été soulevé de l'écran tactile, attribuer le point de coordonnées à titre de témoin;
des moyens pour mapper les points de coordonnées sur des points représentant des témoins connus du système de traitement de données; et
des moyens pour envoyer un message indiquant quel message avait été envoyé à un module d'ordinateur approprié, en réponse à la coïncidence entre le point de coordonnées et un témoin connu.
